# EUROPEAN PATENT APPLICATION

(11) **EP 4 047 571 A1**
(43) Date of publication of application: **24.08.2022**
(21) Application number: 21158522.9
(22) Date of filing: 22.02.2021
(51) Int. Cl.: G07C 9/00

(54) **METHOD AND DEVICE FOR PROVIDING AN AUTHORIZATION TO ACCESS AN INTERACTIVE GOOD**

(71) Applicant: Nagravision Sàrl, 1033 Cheseaux-sur-Lausanne (CH)
(72) Inventor: ZHAO, Yishan, 1033 Cheseaux-sur-Lausanne (CH)
(74) Representative: Poindron, Cyrille

(57) **Abstract**

A method for providing an authorization (1) to access an interactive good (10) by means of a portable electronic key (20),
the interactive good comprising at least one transceiver (11) configured to emit at least a first signal (S1) and to receive at least a second signal (S2) from the portable electronic key,
said authorization being subject to a successful completion of a control procedure comprising:
- determining a first piece of information (I1) on the basis of at least one strength measurement of the first signal at the portable electronic key,
- determining a second piece of information (I2) on the basis of at least one strength measurement of the second signal at the transceiver,
- checking whether the first piece of information is consistent with the second piece of information and, if so, initiating or granting access to an unlocking procedure configured to provide said authorization.

## Description

### TECHNICAL FIELD

The present disclosure relates to the field of access control to lockable/unlockable smart devices, compartments or spaces, and more especially relates to a method for providing an authorization to access an interactive good by means of a portable electronic key configured for handling wireless signal exchanges. In a more specific and pragmatic context, the present disclosure aims to bring a new solution to authorize a person to access a vehicle using a remote portable electronic device such as a mobile phone for example. The subject-matters of the present disclosure relate to a method, a portable electronic key and an interactive good.

### BACKGROUND

In the automotive field, nowadays it is more and more common to use a keyless entry system to remotely lock, unlock a car using radio frequency (RF) signals. Such a remote system can sometimes even be used to start the car's engine. There are two main types of systems. The most widely spread system relates to a so-called active keyless entry system where the key fob usually comprises at least two buttons to open and close the vehicle remotely. But in recent years, there is a trend towards the implementation of a so-called passive system which, for more comfort, does not require any action from the user, such as pressing a button. Such a system is referred to as remote keyless system (RKS) and relates to a remote central locking system that uses an electronic remote control device as a key. This device can be automatically activated when the portable electronic key (i.e. the electronic remote control device) is at proximity of the vehicle to which it is paired or binded.

Advantageously, this technology allows the driver access to the car by automatically unlocking it when the bearer of the portable electronic key is near the car, usually a few meters away (e.g. 1-2 meters), or touches a door handle. Advantageously, the driver does not need to press any button on the key fob to unlock his car. Conversely, when the driver leaves his vehicle and moves a few meters away form it (e.g. 2-3 meters), the system automatically locks the car.

To achieve such locking/unlocking feature each of the key fob and the vehicle comprises a transceiver that is able to detect each other using RF signals. Typically, the vehicle continually sends out encrypted messages using one or several transceivers arranged at several locations on the vehicle. When the key fob is within the range of the vehicle emitted signal, it responds using an encrypted response. If the encrypted messages exchanged between the vehicle and the key fob are correct, typically after a successful mutual authentication, the vehicle unlocks.

The RKS system usually uses a so-called rolling code, instead of a static unique code, in order to ensure that a fresh code is generated each time a locking/unlocking operation is needed. Such a technique prevents replay attacks during which a malicious person aims to discreetly thieve the code using a recording device placed within the signal range. In case of successful attack, such a person becomes able to replay the code in order to unlock the vehicle instead of the key fob.

However, the rolling code system does not allow to prevent so-called rolljam attacks which do not only record the codes sent via the RF signal emitted by the key fob, but also aim to block the RF signal emitted by the key fob in order to prevent it from reaching the vehicle. Since the RF signal has been blocked in the first attempt, the owner presses again the key button to unlock the vehicle in a second attempt. Each time the button is pressed, a new code is generated from a sequence that is automatically generated by an algorithm within the key fob. The same algorithm (or a matching algorithm) works within the vehicle, so that both the vehicle and the key fob follow in synchronism the same sequence of codes. Since both the first code and the next code have been blocked by the hacker module, the latter can merely replay immediately the first code which will be finally received by the vehicle without being blocked. As the result, the vehicle unlocks in the presence of the owner after his second attempt. However, at this stage, the hacker module has already recorded the next code of the sequence, so that the hacker will be able, without the algorithm, to unlock again the vehicle after it will be further locked.

One of the most drawbacks for hackers is that both replay attack and rolljam attack require the hacker to be present at the same time the owner unlocks his car. To overcome such an issue, malicious persons have developed on another attack that is referred to as relay attack.

A relay attack allows a thief to get the code of a passive remote keyless system, namely a system that can work remotely and that does not require the bearer to press any button to unlock the vehicle. To this end, the thieves usually operate by pair, e.g. during the night when the vehicle is parked next to the owner's house. Such an attack is based on the assumption that the key fob is located near the front door of the house, usually hung on the wall or placed on a chest of drawers near the entrance.

In order to carry out a relay attack, two transceivers are needed. The first transceiver is located a proximity of the vehicle to be unlocked, while the second is placed outside the house, as close as possible to the expected key fob location, i.e. close to the front door. The first transceiver emits a wake-up signal to the vehicle using a RF signal that is compliant with the vehicle model. The vehicle detects the wake-up signal and responds by sending an authentication request. Alternatively, the transceiver may scan or find out an advertising signal emitted by the vehicle in order to establish a communication channel with the vehicle before it sends the authentication request. This request is relayed by the first transceiver to the second transceiver using a high range signal or more generally a wired or wireless connection. Using an RF signal having an appropriate frequency, the second transceiver forwards the authentication request to the key fob located inside the house. Accordingly, the second transceiver emulates the vehicle and transmits messages received to or from the key fob. If the key fob is within the range of 5-15 meters, it will detect the signal comprising the authentication request and will respond with a message comprising identification data. This message will be detected by the second transceiver and transmitted as such to the first transceiver. The latter will merely forward the message to the vehicle using an RF signal compliant with the communication frequency of the vehicle. Upon receipt, the vehicle checks the identification data comprises in the message and unlocks the doors given that these data come from the right key fob.

It should be noted that such a relay attack is applicable for any kind of message transmitted between the vehicle and the key fob, namely even if the exchanged messages are encrypted. This results from the fact that the transceivers merely act as relaying devices to virtually bring the key fob closer to the vehicle. In addition, such an attack may be also applied if the second transceiver is carried by one of the hackers which follows the car owner after the latter left his car.

To prevent relay attacks, one possible solution is to put the key fob, when not used, in a metal enclosure that acts as a Faraday cage to block any RF signal. While this solution may be suitable when the key is left in a place such as the owner's home, it is not very practical when the owner carries the key fob in one of his pockets for example.

Another solution may consist to switch off the key fob when it is not in use. However, numerous key fobs do not comprise such functionality since it undermines the advantage provided by the passive remote keyless system.

A further solution may consist to add a relay attack detector to the key fob. However, carrying an additional electronic device is not convenient.

Accordingly, there is a need for a more efficient and convenient solution to improve the security when providing an authorization to access an interactive good by means of a portable remote electronic key. More specifically, such a solution should be at least partially able to overcome the aforementioned issues and drawbacks, and should especially be efficient to prevent the relay attacks.

### SUMMARY OF THE SOLUTION

To address this concern, the present disclosure suggests, as a first aspect, a method for providing an authorization to access an interactive good by means of a portable electronic key configured for handling wireless signal exchanges. The interactive good comprises at least one transceiver configured to emit at least a first signal and to receive at least a second signal from the portable electronic key. The authorization is subject to a successful completion of a control procedure comprising:
- determining a first piece of information on the basis of at least one strength measurement of the first signal at the portable electronic key,
- determining a second piece of information on the basis of at least one strength measurement of the second signal at the transceiver,
- checking whether the first piece of information is consistent with the second piece of information and, if so, initiating or granting access to an unlocking procedure configured to provide said authorization.

Thanks to the present solution, the launching of the unlocking procedure, which may be a procedure commonly used in known key fobs, depends on a positive result being obtained at the end of the control procedure. If the control procedure ends in failure, the unlocking procedure does not start. In addition, the determination of the first piece of information is performed by at least one measurement carried out at the portable electronic key, preferably by the portable electronic key itself. This means that at least a part of the control procedure is carried out at or by the portable electronic key and is therefore not based on the acceptance of data transmitted by the interactive good (e.g. a vehicle) or by a third party device. Accordingly, this excludes handling measurements transmitted by a relay for example. As long as the determination of the first piece of information cannot be carried out at or by the portable electronic key, due to a too long distance between the key fob and the related vehicle for example, the control procedure cannot be completed, thus preventing relay attacks. The same is true regarding the determination of the second piece of information carried out at the interactive good which is the vehicle in the present example.

According to a preferred embodiment, each of the first piece of information and the second piece of information relates to at least one of:
(i) a received signal strength indicator (RSSI),
(ii) a calculated distance between the transceiver and the portable electronic key and
(iii) a distance or received signal strength indicator variation.

In one embodiment, the method further comprises sending, between the interactive good and the portable electronic key, at least one parameter regarding the transmission power of at least one of the transceiver and the portable electronic key.

According to another preferred embodiment, the interactive good comprises at least two transceivers distributed at different locations, each of these transceivers being at least configured to emit at least a first signal and to receive at least the second signal from the portable electronic key. In addition, the control procedure aims to undertake the following steps:
- determining, for each of said first signals, a first piece of information on the basis of at least one strength measurement of the first signal at the portable electronic key,
- determining, for said second signal, a second piece of information on the basis of at least one strength measurement of the second signal at each of the transceivers, and
- checking whether the first pieces of information are consistent with the second pieces of information and, if so, initiating or granting access to an unlocking procedure configured to provide said authorization.

In one embodiment, the step for checking whether the first pieces of information are consistent with the second pieces of information is achieved by:
- forming a first orderly sequence of data by ordering the first pieces of information,
- forming a second orderly sequence of data by ordering the second pieces of information, and
- checking the consistency between the first and second orderly sequences of data.

Preferably, each transceiver is associated with a specific transceiver identifier which is assigned to the first and second pieces of information with which it is involved, and
the consistency between the first and second orderly sequences of data is determined on the basis of the transceiver identifiers associated to the first and second pieces of information of the first and second orderly sequences of data.

According to one embodiment, each second piece of information is transmitted to the portable electronic key and the control procedure is performed at the portable electronic key, and/or each first piece of information is transmitted to the interactive good and the control procedure is performed at the interactive good.

In another embodiment, if the control procedure is performed at the portable electronic key and at the interactive good, then initiating or granting access to the unlocking procedure is subject to the successful completion of each of the control procedures.

In one embodiment, any first piece of information and/or any second piece of information is transmitted in an encrypted form and/or is subject to a first authentication process.

Preferably, at least one of the first signal(s) and the second signal is a radio signal, preferably a Bluetooth signal, a Bluetooth low energy signal or a Wi-Fi signal.

According to another embodiment, the interactive good comprises several access ways and the authorization relates at least to access the interactive good via the way closest to the transceiver involved with the first and/or second piece of information which represents a closest position of the portable electronic key relative to the interactive good.

In one embodiment, the unlocking procedure comprises at least one of an identification of the portable electronic key by the interactive good and an identification of the interactive good by the portable electronic key, and at least one of these identifications is preferably subject to a second authentication process.

According to a preferred embodiment, the interactive good is a vehicle, preferably a motor vehicle and still preferably a mobility or a micro-mobility device, and/or the portable electronic key is a key fob, a smart phone, a personal assistant, a netbook, a smart watch or a smart wearable.

According to a second aspect, the present disclosure relates to a portable electronic key configured to provide, in accordance with any of the embodiments of the method or with any possible combination of these embodiments, an authorization to access the interactive good. The aforementioned portable electronic key comprising:
- an electronic key transceiver configured for handling wireless signal exchanges including:
   - at least one first signal, preferably at least two first signals, each received from one transceiver of said interactive good, and
   - a second signal emitted by said electronic key transceiver,
- a processing unit connected to the electronic key transceiver and configured:
   - to receive, for the first signal, preferably for each of the at least two first signals, a first piece of information determined on the basis of at least one strength measurement of said first signal at the portable electronic key,
   - to receive a related second piece of information determined on the basis of at least one strength measurement of the second signal at said at least one transceiver, preferably at each of said transceivers, and
   - to check whether each first piece of information is consistent with the related second piece of information and, if so, initiating or granting access to an unlocking procedure configured to provide said authorization.

According to a third aspect, the present disclosure relates to an interactive good configured to provide, in accordance with any of the embodiments of the method or with any possible combination of these embodiments, an authorization to access thereto through at least wireless signal exchanges undertaken with a portable electronic key. To this end, the aforementioned interactive good comprises:
- at least one transceiver, preferably at least two transceivers distributed at different locations, each transceiver being at least configured to emit at least a first signal and to receive at least a second signal from the portable electronic key,
- a controller connected to said at least one transceiver, so as:
   - to receive, for each first signal, a first piece of information determined on the basis of at least one strength measurement of this first signal at the portable electronic key,
   - to receive, from the at least one transceiver, preferably from each of the transceivers, a related second piece of information determined on the basis of at least one strength measurement of the second signal at each transceiver, and
   - to check whether each first piece of information is consistent with the related second piece of information and, if so, initiating or granting access to an unlocking procedure configured to provide said authorization.

Other embodiments and advantages will be disclosed in the following detailed description.

### BRIEF DESCRIPTION OF THE DRAWINGS

The solution and the embodiments suggested in the present disclosure should be taken as non-limitative examples and will be better understood with reference to the attached figures in which:
Figs. 1-2 are overviews of the main entities with signals and pieces of information that may be involved by the present method according to two different embodiments,
Fig. 2 depicts the main steps of the control procedure that, if successful, initiates or grants access to the unlocking procedure,
Figs. 4-5 each shows a schematic example of the two sequences of data that may be determined for checking the consistency between the first and second pieces of information,
Fig. 6 shows an embodiment of the method in which at least one of the first pieces of information and the second pieces of information is sent using at least one message,
Fig. 7 depicts the main steps of the unlocking procedure according to one embodiment,
Fig. 8 provides a schematic illustration of a control remote device that may be used as portable electronic key, and
Fig. 9 provides a schematic illustration of an interactive good which may be suitable for implementing the present method.

### DETAILLED DESCRIPTION

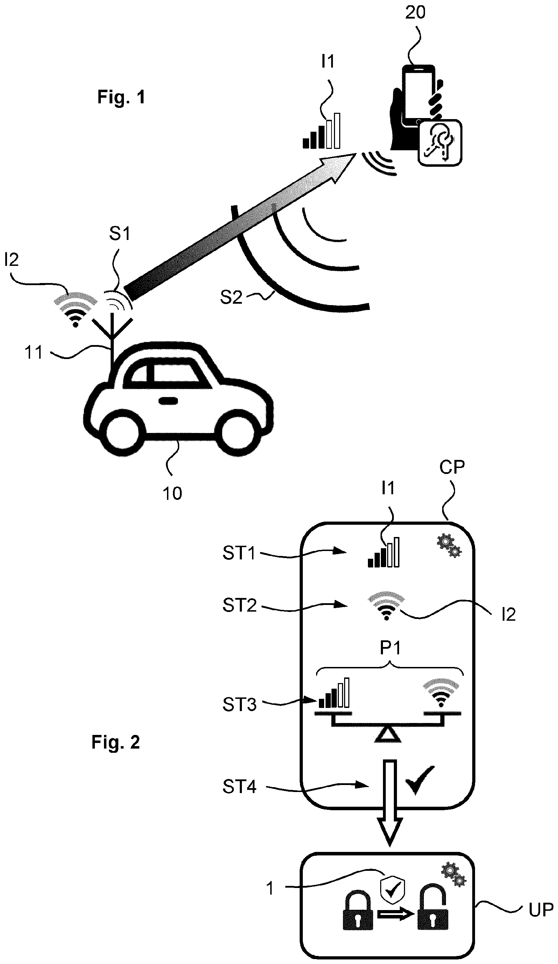

Fig. 1 shows a first schematic overview of the two main entities from which signals and pieces of information are involved in the present solution. The first entity is an interactive good 10 such as a vehicle, preferably a motor vehicle, having interactive or smart properties. Generally speaking, the interactive good preferably refers to any interactive object, compartment or space provided with interactive capabilities or with an artificial intelligence, and which may require an authorization to access it. The access to the interactive good 10 may include the right to use, to enter, to unlock and/or to open it. Furthermore, this right may apply to the whole of the good or to at least a part of it. It should be also noted that the interactive good could be concerned by the Internet of Things (IoT) or not.

The second main entity is a so-called portable electronic key 20 which may refer to any portable electronic device provided with wireless communication capabilities, in particular with bi-directional communication capabilities for handling or processing wireless signal exchanges, preferably with at least the interactive good 10. Accordingly, the portable electronic key 20 cannot be regarded as a basic remote control device such as a TV remote control, given that it must be able to at least send and receive wireless signals and process them using more or less complex functionalities. In addition the portable electronic key 20 should be further able to carry out strength signal measurements. Although there is no intention to limit the interactive good to a vehicle, the present disclosure will sometimes refer to the vehicle instead of the interactive good 10 for the sake of simplification.

The portable electronic key may be e.g. a key fob or a smart device such as a mobile phone, a personal assistant, a netbook, a smart watch or a smart wearable for instance. Although the portable electronic key 20 refers to the word "key", it should be noted that there is no requirement for this entity to physically include a key for getting access to the interactive good. Accordingly, the portable electronic key 20 may rather be regarded as a virtual key. For the same reasons as those mentioned above, there is no intention to limit the portable electronic key 20 to a key fob or a mobile phone, even if the present disclosure will sometimes refer to such devices instead of specifically mentioning the expression "portable electronic key".

As shown in the aforementioned Figures, the interactive good 10 is a vehicle, preferably a motor vehicle such as a private car, whose owner has the portable electronic key 20. Although the present disclosure refers to the owner of the vehicle or the owner of the key fob, it should be understood that instead of the owner, one may consider any other person which is entitled to use the interactive good 10 or the portable electronic key 20 for accessing the interactive good. The interactive good 10 may also be a mobility device, in particular a micro-mobility device such as a scooter, a bike and any other micro vehicle.

New generations of motor vehicles are provided with a constellation of transceivers allowing the localization of key fob with respect to the vehicle. Indeed, thanks to these transceivers, it may be possible to detect if the key fob is near the vehicle and whether it is located inside or outside the vehicle. Typically, a car has five transceivers which all together produce a low frequency magnetic field covering both the cabin (i.e. the passenger compartment) and the vicinity of the car.

As schematically depicted in Fig. 1, the present solution is based on an interactive good 10 comprising at least one transceiver 11 configured to emit at least a first signal S1 and to receive at least a second signal S2. The second signal S2 is typically a signal that may come from the portable electronic key 20, in particular from the portable electronic key which is associated to the interactive good 10 and has therefore been paired with the interactive good 10, e.g. during a prior setting phase or during an initialization process.

As schematically shown in Fig. 2, the authorization 1 to access the interactive good 10 by means of the portable electronic key 20 is subject to a successful completion of a control procedure CP. The control procedure CP mainly comprises four steps ST1 to ST4 which may lead to initiate or grant access to an unlocking procedure UP configured to provide the authorization 1, in case of successful completion.

The first step ST1 aims to determine a first piece of information 11 on the basis of at least one strength measurement of the first signal S1 at the portable electronic key 20.

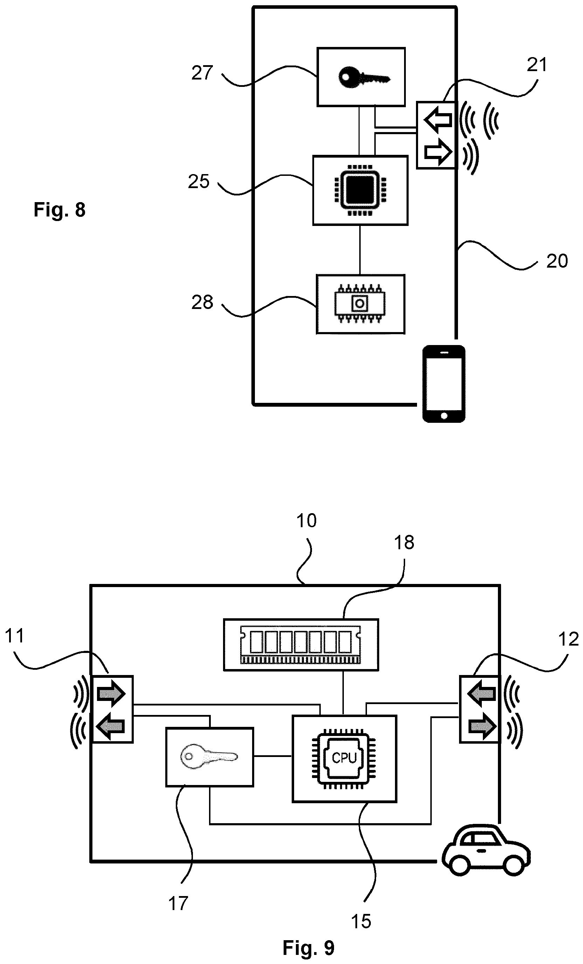

The first step ST1 is achieved either by the portable electronic key itself, e.g. by its transceiver 21 (Fig. 8), or by a dedicated module (e.g. a sniffer) comprised in or connected to the portable electronic key 20 and, in the latter case, placed next to it.

It should be noted that each of the piece of information to which the present disclosure refers may result from a single measurement or from a plurality of measurements which may then be averaged. It also means that any step aiming to determine a piece of information originally involves taking at least one measurement, i.e. making at least one measurement of the received signal strength. As it will be disclosed in more detail later, a piece of information may be an indication such as a so-called Received Strength Signal Indicator (RSSI) for instance.

The second step ST2 is similar to the first one but it is achieved onto the second signal S2 by the transceiver 11 of the interactive good 10. Accordingly, the second step ST2 aims to determine a second piece of information 12 on the basis of at least one strength measurement of the second signal S2 at the transceiver 11.

The third step ST3 of the control procedure CP aims to check whether the first piece of information 11 is consistent with the second piece of information 12. Several different manners could be applied to check this consistency. Some of them will be part of embodiments which will be detailed later in the present disclosure.

The last step ST4 aims to initiate or grant access to the unlocking procedure UP if the third step ST3 provides a positive result, i.e. if there is, for example, a match between the first piece of information 11 and the second piece of information 12. The unlocking procedure UP is configured to provide the authorization 1, and in particular it is configured to deliver the authorization 1 if this unlocking procedure is successfully completed.

Due to fourth step ST4, the execution of the unlocking procedure UP depends on the successful of the control procedure. If the third step ST3 does provide a positive result, the process may be stopped or a countermeasure may be performed. Such a countermeasure may consist to execute at least one subsequent action, for example triggering an alarm, preventing any further unlocking during a predetermined time interval or sending an alert message (RF signal, SMS, email, etc...) to the owner so that he can be notified accordingly e.g. via any electronic device such as smart phone, TV, personal computer, and so on.

Advantageously, the aforementioned control procedure CP prevents any relay attack given that it is at least based on measurements carried out on the one hand at the interactive good 10 and on the other hand at the portable electronic key 20. In contrast, any relaying device remains inadequate for carrying out measurements. In addition, it should be noted that measurements performed on a signal may be quite sensitive since the results are different depending on where the measurements are performed. Accordingly, even if a device of a relay attack would be located in a range of about 2-15 meters from the portable electronic key 20 in order to determine the first piece of information instead of the portable electronic key, such a distance would be long enough to cause different measurements. Therefore, a first piece of information determined by a third party device would be different from that determined by the portable electronic key 20.

Furthermore, given that the third step ST3 is carried out by at least one of the two entities among the interactive good 10 and portable electronic key 20, and given that the entity which carried out the third step ST3 has also determined at least a part of the pieces of information, therefore this entity does not need to receive the aforementioned part of the pieces of information from an external source. Thus, any substituting data received from a third party can be ignored, in particular if such data aims to replace the piece of information determined by the entity which is in charge of performing the third step ST3.

Moreover, tampering the piece of information that has been determined by the entity which is in charge of performing the third step ST3 seems very difficult given that this piece of information does not need to be sent to a remote device but can be processed on site.

For all these reasons, the present method suggests an efficient solution to at least overcome the issues resulting from relay attacks.

For the sake of completeness, it should be noted that the third step ST3 aiming to check the consistency of the pieces of information implies the transmission, between the interactive good 10 and the portable electronic key 20, of at least one of the first piece of information 11 and the second piece of information 12, or of at least one parameter allowing to derive the first and/or second piece of information 11, 12.

According to a preferred embodiment, each of the first piece of information 11 and the second piece of information 12 relates to at least one of:
(i) a received signal strength indicator (RSSI),
(ii) a calculated distance between the transceiver (11) and the portable electronic key (20), and
(iii) a distance variation or a RSSI variation.

The Figures to which the present disclosure relates are mainly based on the example where each of the pieces of information is a received signal strength indicator (RSSI). Indeed, the received signal strength indicator is a piece of information that can easily obtained from at least one signal measurement, more particularly from at least one strength measurement of any of the signals S1, S2.

According to one scenario, the first piece of information 11 may be a first received signal strength indicator RSSI1 and the second piece of information 12 may be a second received signal strength indicator RSSI2. The third step ST3 for checking whether the first piece of information 11 is consistent with the second piece of information 12 may be carried out by comparing the two received signal strength indicators RSSI1, RSSI2 with each other. However, such a comparison is not obvious; in particular if no calibration has been made between the transceivers 11, 21 that respectively emit the signals S1 and S2.

To overcome this issue, it may be possible to level the indicators RSSI1, RSSI2 by transmitting, between the interactive good 10 and the portable electronic key 20, at least one parameter regarding the transmission power of the transceiver 11, 21. For example, a calibrated transmission power TxPw1 of the transceiver 11 of the interactive good 10 may be loaded in the portable electronic key 20 and/or a calibrated transmission power TxPw2 of the transceiver 21 of the portable electronic key 20 may be loaded in the interactive good 10. Each calibrated transmission power TxPw can be regarded as a reference value issued from a calibration process. Typically, it may correspond to the RSSI determined on a signal emitted by the transceiver (source) when the strength of this signal is measured at a certain distance. This distance is usually 1 meter and is commonly used as reference distance for the calibration process. Furthermore, the calibrated transmission power TxPw is determined for a certain transmission power delivered by the emitter. Accordingly, if the emitter (e.g. the transceiver) may have several transmission power levels (e.g, 0 to 7), it would be advisable to add a parameter defining what is the current transmission power level of the emitter. The transmission power levels are usually configured by the manufacturer. A default value is set for an expected maximal radio frequency covered area. It could be dynamically changed in special use cases, for example if the RSSI is not satisfied to the quality of service for the receiver.

Transmitting at least one parameter concerning the calibrated transmission power and/or the transmission power level may be carried out by sending at least one setting message, e.g. during an initialization phase. Alternatively, any of these parameters may be loaded in the related device 10, 20 using another way, e.g. once during a setting phase or during the manufacturing process of the devices 10, 20, so that the calibrated transmission power TxPw1, TxPw2 may be already present during the implementation of the present solution (method, portable electronic key or interactive good). Accordingly, each of the calibrated transmission power TxPw1, TxPw2 may be used as a corrective parameter for leveling any of the received signal strength indicators RSSI1, RSSI2, so that they can be properly compared.

According to another scenario, any of the first piece of information 11 and second piece of information 12 may be a distance, in particular the distance between interactive good 10 and the portable electronic key 20, and more specifically the distance between the transceiver 11 of the interactive good 10 and the transceiver 21 of the portable electronic key 20. Indeed, there are several formulas for determining such a distance on the basis of the RSSI and the calibrated transmission power TxPw. For example, the distance d may be determined on the basis of the following formula: d = 10^{(TxPw-RSSI)/20}. It should be noted that such a distance may be determined, at the portable electronic key 20 and/or at the transceiver 11, as a piece of information 11, 12. Alternatively, any of the distances may be derived (for checking consistency of step ST3) from the related parameter TxPw and from the related RSSI. In this case, at least one of the calibrated transmission power TxPw, the transmission power level and the RSSI may be regarded as a parameter to derive a piece of information 11, 12.

According to a further scenario, any of the first piece of information 11 and second piece of information 12 may be a variation, in particular a distance variation or a RSSI variation. In such a case, two successive indications may be determined during each of the first step ST1 and the second step ST2 and the first and second piece of information 11, 12 may each be determined by the difference of the two successive indications.

For example, a first and a second indication may be determined at instants t1 and t2 at the portable electronic key 20. These indications may relate to distances (such as the distance mentioned in above in connection with the former scenario) or to received signal strength indicators such as RSSI1. The variation between these two indications may be determined e.g. by calculating the difference between the first indication at instant t1 and the second indication at instant t2. This first variation may be used as the first piece of information 11 determined at the first step ST1. The same approach may be carried out at the transceiver 11 of the interactive good in order to obtain a second variation (having the same nature as the first variation) that may be used as the second piece of information 12 determined at the second step ST2. The consistency between the first and second piece of information 11, 12 can be checked at the third step ST3 by comparing the first variation with the second variation. In addition to the consistency, using a variation as a piece of information advantageously allows to determine whether the portable electronic key 20 is moving towards or away from the interactive good 10, or even if the portable electronic key 20 is stationary relative to the interactive good 10.

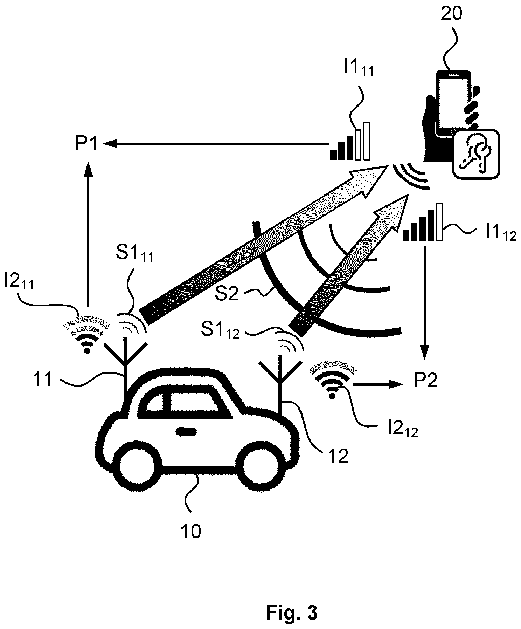

As schematically depicted in Fig. 3, the present solution may be based on an interactive good 10 comprising at least two transceivers 11, 12 distributed at different locations, preferably at the periphery of the interactive good. In the example shown in Fig. 3, the first transceiver 11 is located at the rear of the vehicle, for example near the trunk, whereas the second transceiver 12 is located at the front of the car. Of course, other (non-illustrated) transceivers may be added, near the left and right doors for example.

Each transceiver 11, 12 is, among other, configured to emit at least a first signal S1 and to receive at least a second signal S2. Since the first signal emitted by the first transceiver 11 is preferably different from the first signal emitted by the second transceiver 12, the reference numeral 11, 12 has been added to the first signal identification S1, depending on it comes respectively from the first transceiver 11 or the second transceiver 12.

On the other hand, since the portable electronic key 20 preferably comprises a single transceiver 21 (Fig. 8), the latter emits at least one second signal which is referred to as S2. This second signal S2 is received both by the first transceiver 11 and the second transceiver 12 of the interactive good 10. However, given that these two transceivers 11, 12 are not located at the same place at the interactive good 10, they are a priori located at different distances from the portable electronic key 20. If these distances are not the same, the intensity of the second signal S2 received by the first transceiver 11 will be different from that of the same signal S2 received by the second transceiver 12. Indeed, the intensity of the signal is inversely proportional to the square of the distance between the source and the sink. As mentioned in connection with the embodiment shown in Fig. 1, this intensity can be measured by each transceiver, or by a dedicated RSSI module such as a sniffer associated or linked to the transceiver(s), and can be quantified by a value which is referred to as "Received Signal Strength Indicator" (RSSI).

From the foregoing, it also means that the transceiver 21 of the portable electronic key 20 may be able to perform strength measurements for determining a first piece of information 11 for each of the first signals S1₁₁, S1₁₂ emitted by the first and the second transceivers 11, 12 of the interactive good 10. The first pieces of information I1₁₁, I1₁₂ determined at the portable electronic key 20 and resulting from the first signals S1₁₁, S1₁₂ are represented e.g. in Figs 3-4 by straight bar graphs. On the other hand, regarding the second signal S2, the second pieces of information I2₁₁, I2₁₂ determined respectively at the first transceiver 11 and at the second transceiver 12 of the interactive good 10 are represented by arched bar graphs.

As illustrated in the example of Fig. 3, the pieces of information I1₁₁ and I2₁₁, which both result from the first communication segment located between the first transceiver 11 and the portable electronic key 20, relate to RSSIs and have a level equivalent to three bars. On the other hand, the pieces of information I1₁₂ and I2₁₂, which both result from the second communication segment located between the second transceiver 12 and the portable electronic key 20, also relate to RSSIs and have a level equivalent to four bars. This level difference may typically result from the fact that the second transceiver 12 is closer to the portable electronic key 20 than the first transceiver 11.

On the basis of the illustration provided by Fig. 3, the steps ST1 to ST4 of the control procedure CP may be regarded as follows:
- as first step ST1: determining, for each of the first signals S1₁₁, S1₁₂, a first piece of information I1₁₁, I1₁₂ on the basis of at least one strength measurement of the first signal S1_{11,} S1₁₂ at the portable electronic key 20,
- as second step ST2: determining, for the second signal S2, a second piece of information I2₁₁, I2₁₂ on the basis of at least one strength measurement of the second signal S2 at each of the transceivers 11, 12,
- as third step ST3: checking whether the first pieces of information I1₁₁, I1₁₂ are consistent with the second pieces of information I2₁₁, I2₁₂ and, if so,
- as fourth step ST4: initiating or granting access to an unlocking procedure UP configured to provide the authorization 1.

Generally speaking, it should be noted that, as far as possible, all the features that may be applied to the embodiment to which Fig. 1 refers are also applicable to the embodiment to which Fig. 3 refers. The opposite is also true (still as far as possible).

By combining the embodiments to which Figs. 1 and 3 refer, the method of the present solution may be regarded as being a method for providing an authorization 1 to access an interactive good 10 by means of a portable electronic key 20 configured for handling wireless signal exchanges, wherein
the interactive good 10 comprises at least one transceiver 11, preferably at least two transceivers 11, 12 distributed at different locations, each configured to emit at least a first signal S1, S1₁₁, S1₁₂ and to receive at least a second signal S2 from the portable electronic key 20, and wherein
the aforementioned authorization 1 is subject to a successful completion of a control procedure CP comprising:
- as first step ST1: determining, for each first signal S1, S1₁₁, S1₁₂, a first piece of information 11, I1₁₁, I1₁₂ on the basis of at least one strength measurement of this first signal S1, S1_{11,} S1₁₂ at the portable electronic key 20,
- as second step ST2: determining, for the second signal S2, a related second piece of information 12, I2₁₁, I2₁₂ on the basis of at least one strength measurement of the second signal S2 at each transceiver 11, 12, and
- as third step ST3: checking whether each first piece of information 11, I1₁₁, I1₁₂ is consistent with the related second piece of information 12, I2₁₁, I2₁₂ and, if so,
- as fourth step ST4: initiating or granting access to an unlocking procedure UP configured to provide said authorization 1.

According to one embodiment, all the transceivers 11, 12, 21 or all the modules or sniffers configured for determining pieces of information, such as received signal strength indications (RSSI), have the same sensitivity and preferably the same transmission power level. This feature may advantageously suppress any corrections that could be applied to the strength measurements (or to the derived indications) in order to balance the values (e.g. the RSSIs) obtained on both sides, i.e. on the interactive good side and on the portable electronic key side.

As shown in Fig. 3, the first communication segment, located between the first transceiver 11 and the portable electronic key 20, comprises the related first piece of information I1₁₁ and second piece of information I2₁₁ that together form a first data pair P1. The same is true regarding the second communication segment, between the second transceiver 12 and the portable electronic key 20, which comprises the related first piece of information I1₁₂ and second piece of information I2₁₂ that together form a second data pair P2. Therefore, each communication segment forms a pair of data which is determined, relative to one of the transceivers 11, 12, by associating the second piece of information (I2₁₁ or I2₁₂), determined at the related transceiver, and the first piece of information (I1₁₁ or I1₁₂) resulting from the first signal (S1₁₁ or S1₁₂) emitted by the same transceiver. Accordingly, the number of data pairs P1, P2 depends on the number of transceivers 11, 12 of the interactive good 10.

In one embodiment, the third step ST3 is performed for at least a part of data pairs P1, P2. In other words, if for example the interactive good 10 comprises five transceivers that may involve five communication segments with the portable electronic key 20, only three or fourth of data pairs resulting from these communication segments may e.g. be used. Advantageously, using fewer transceivers (i.e. fewer communication segments) than the maximum number of transceivers available at the interactive good 10 may increase the execution speed of the control procedure CP while requiring less computing resources.

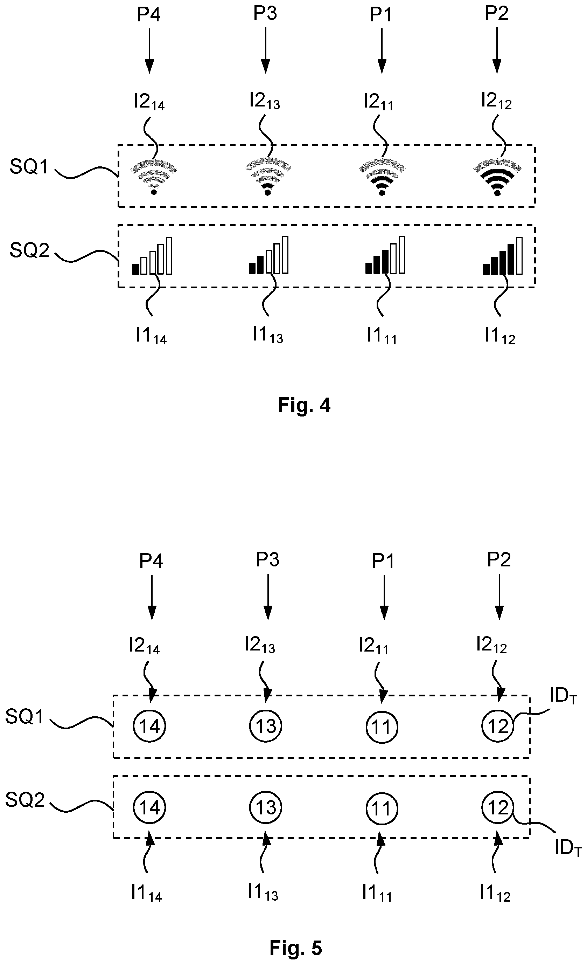

According to another embodiment shown in Figs 4-5, the third step ST3 is achieved by:
- forming a first orderly sequence of data SQ1 by ordering the first pieces of information I1₁₁, I1₁₂,
- forming a second orderly sequence of data SQ2 by ordering the second pieces of information I2₁₁, I2₁₂, and
- checking the consistency between the first and second orderly sequences of data SQ1, SQ2.

As shown in Fig. 4, the first orderly sequence of data SQ1 is obtained e.g. by ordering the first received signal strength indications (each RSSI1 being used as first piece of information 11) according to their intensities, more specifically by ordering their intensities in an increasing manner, namely from the lower intensity to the highest one. It should be noted that a different ordering or sequencing method may be also applied such as a sorting in a decreasing order.

The second orderly sequence of data SQ2 is obtained by ordering the second received signal strength indications (each RSSI2 being used as second piece of information 12) in the same way as for the first orderly sequence of data SQ1.

Then, the consistency between the two orderly sequences of data SQ1, SQ2 can be checked. This can be achieved by several ways. It may consist to check whether data of the first orderly sequence SQ1 is the same as data of the second orderly sequence SQ2. For example, the consistency may be checked by verifying the level of the received signal strength indicators (RSSIs). In the example of Fig. 4, this may be done by checking that both the first RSSIs (i.e. I2₁₄ and I1₁₄) of the two sequences of data SQ1, SQ2 have the same number of bars in their bar graphs, and by proceeding in the same way for each of the RSSIs of these sequences of data. In Fig. 4, one can see that there is a match for each of data pair P1 to P4. Therefore, it can be concluded that the first and second orderly sequences of data SQ1, SQ2 are consistent with each other.

Instead of considering the bars of the bar graphs, it may be possible to consider the values resulting from the measurements of the receive signal strengths. However, since some minor differences may appear been data of a same pair, even if the sequences of data SQ1, SQ2 are consistent with each other, it could be recommended in that case to introduce a certain tolerance range for each of these measured values.

Anyway, it should be pointed out that the pieces of information 11, 12 is not limited to refer to RSSIs, but may refer e.g. to distances or variations as already mentioned in connection with a previous embodiment.

Fig. 5 shows another way for checking the consistency between the two orderly sequences of data SQ1, SQ2, more specifically a way for checking the sequencing of the related data, in particular a way to check whether sequencing of these data are the same. In this embodiment, the consistency is checked on the basis of transceiver identifiers ID_{T}. Indeed, each transceiver 11, 12 can be associated with a specific transceiver identifier ID_{T} which may be assigned to the first and second piece of information 11, 12 with which it is involved. In the present example, the identifier ID_{T} of the first transceiver 11 is the number 11 and the identifier ID_{T} of the second transceiver 12 is the number 12. In Fig. 5, fourth transceivers of the interactive good 10 have been considered and their identifiers are defined through the numbers 11, 12, 13 and 14.

Therefore, the consistency between the first and second orderly sequences of data SQ1, SQ2 may be determined on the basis of the transceiver identifiers ID_{T} which are associated to the first and second pieces of information 11, 12 of these first and second orderly sequences of data SQ1, SQ2. It means that the third step ST3 may consist to check whether the sequence of the transceiver identifiers ID_{T} assigned to the pieces of information of the first orderly sequence SQ1 is the same as the sequence of identifiers ID_{T} assigned to the pieces of information of the second orderly sequence.

Referring to the example shown in Fig. 5, the first sequence of data SQ1 comprises the four identifiers ID_{T} which have been ordered depending on the pieces of information (in particular the numerical values comprised in the pieces of information) assigned to the signals emitted by the transceivers identified by these identifiers. In this example, the orderly sequence of data comprises the following data: 14, 13, 11 and 12. Since the first and second orderly sequences of data SQ1, SQ2 are the same, namely the sequencing comprising the numbers 14, 13, 11 and 12, it means that the two orderly sequence of data SQ1, SQ2 are consistent (i.e. concordant) with each other.

Advantageously, providing a sequencing based on the identifiers ID_{T} allow to be freed from slight differences between numerical values comprised in pieces of information of the same data pair. It should be noted that the transceiver identifiers of any signal may be modulated within these signals or may be provided within messages carried by these signals.

According to another embodiment, the third step ST3, aiming to check whether the first pieces of information I1_{11,} I1₁₂ are consistent with the second pieces of information I2₁₁, I2₁₂, is achieved by comparing the two pieces of information 11, 12 within each data pair. This is an alternate way which may further take into account the numerical value comprised in the pieces of information, for example, in addition to taking into account the concordance of the identifiers assigned to each piece of information.

In one embodiment, each second piece of information 12, I2₁₁, I2₁₂ is transmitted to the portable electronic key 20, so that the control procedure CP is performed at the portable electronic key 20. Alternatively, each first piece of information 11, I1₁₁, I1₁₂ is transmitted to the interactive good 10, so that the control procedure CP is performed at the interactive good 10.

According to a further way, each first piece of information 11, I1₁₁, I1₁₂ is transmitted to the interactive good 10, each second piece of information 12, I2₁₁, I2₁₂ is transmitted to the portable electronic key 20, and the control procedure CP is performed at the interactive good 10 and at the portable electronic key 20. In this case, the fourth step ST4 aiming to initiate or grant access to the unlocking procedure UP is subject to the successful completion of each of the control procedures CP, namely the successful completion of the control procedure performed at the interactive good 10 and the successful completion of the control procedure performed at the portable electronic device 20.

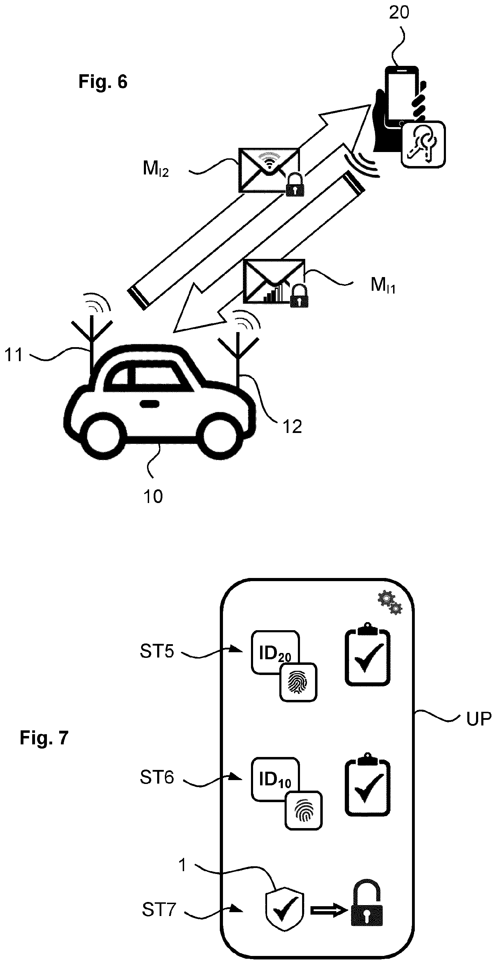

Preferably and as schematically depicted in Fig. 6, any first piece of information 11, I1₁₁, I1₁₂ and/or any second piece of information 12, I2₁₁, I2₁₂ is transmitted in an encrypted form and/or is subject to a first authentication process. The transmission of any of the pieces of information may be carried out within a message M_{I1}, M_{I2} that could be protected by an encryption process. Preferably, if there are several first pieces of information I1₁₁, I1₁₂, they may be transmitted all together within a single message M_{I1} from the portable electronic key 20 to the interactive good 10 instead of being sent each separately within a single message. The same may be done regarding the second pieces of information I2₁₁, I2₁₂ which may be sent in a single message M_{I2} from the interactive good 10 to the portable electronic key 20. If any, the encryption of these messages M_{I1}, M_{I2} may be based on a symmetric or asymmetric encryption scheme and any known efficient algorithm may be used.

Preferably, the transmitted pieces of information are subject to a first authentication process. Such a process may relate to a challenge-response authentication between the interactive good 10 and the portable electronic key 20. The responses to the challenges may based on an algorithm or a predefined sequence of numbers known by both the interactive good 10 and the portable electronic key 20. Alternatively, the first authentication process may be based on a digital signature applied to the message M_{I1}, M_{I2}, namely to the data such as the piece(s) of information contained in the message M_{I1}, M_{I2}. The digital signature may be obtained using a common way, for example using a one-way function (hash function) providing a digest of the aforementioned data, and then using an encryption algorithm for encrypting the digest. Using a shared key or a public key infrastructure (PKI), the recipient will be able to decrypt the digest and to calculate the same digest using the same way in view to compare the decrypted digest with the calculated digest. If there is a match between the two digests, the authentication is successfully completed, thus meaning that the integrity of the data comprised in the message is guaranteed and that the sender is authentic.

In one embodiment, at least one of the first signal S1, S1_{11,} S1₁₂ and the second signal S2 is a radio signal, preferably a Bluetooth signal, a Bluetooth low energy signal or a Wi-Fi signal.

It should be noted that the authorization 1 to access the interactive good 10 may concern the interactive good as a whole or a part of the interactive good. In some cases, the interactive good 10 may comprise several ways to access therein. This is particularly the case if the interactive good is a vehicle such as a car where the access way may refer to the front doors, the rear doors if any, and the trunk door for example. Accordingly, the authorization 1 to access the interactive good 10 may relate to all of the access ways (e.g. simultaneously) or may relate to a part of them only. For example, the authorization may relate at least to access the interactive good via the way closest to the transceiver 11, 12 involved with the first and/or second piece of information 11, 12 which represents the closest position of the portable electronic key 20 with respect to the interactive good 10. For example, if the owner, which carries the portable electronic key 20, comes from the left side of the car, the transceiver which is close to the left side of the car may measure on the signal S2 the highest intensity (thus involving the highest RSSI) among all the other signal strengths measured by the other transceivers distributed at different locations on the car. Accordingly, the authorization 1 could in this case primarily concern the left door(s) of the vehicle.

In addition, the authorization 1 to access the interactive good 10 may concern a part other than the doors of the vehicle. For example, it may relate to the engine of the vehicle. Accordingly, the aforementioned authorization could also provide access to the engine, typically in view of starting the engine.

Upon successful completion of the control procedure CP, the present solution initiates or grants access to the unlocking procedure UP which is configured to provide the authorization 1. Fig. 7 shows, as an example, the main steps of the unlocking procedure UP which may comprise three main steps that are referred to as steps ST5 to ST7.

The step ST5 (i.e. the fist step of unlocking procedure UP) may comprise the identification of the portable electronic key 20 by the interactive good 10. Such identification may consist to receive the identifier ID₂₀ of the portable electronic key 20. This identifier may be a personal (i.e. unique) number assigned to the portable electronic key. If the interactive good 10 recognizes the identifier transmitted by the portable electronic key 20, it proceeds to the next step of the unlocking procedure UP.

The next step ST6 may be similar to the previous step ST5 except that it concerns the identifier ID₁₀ of the interactive good 10 which is this time transmitted to the portable electronic key 20 in order to undertake the identification of the interactive good 10 by the portable electronic key 20. Once the mutual identification (ST5-ST6) has been successfully proceed, the authorization to access the interactive good 10 is provided at the last step ST7, e.g. by unlocking at least one door.

Instead of proceeding with a mutual identification, a single identification may be performed so that one of the steps ST5, ST6 may be optional. Preferably, at least one of these identifications is subject to authentication, namely to a second authentication process that may be similar to the first authentication process previously disclosed. According to one embodiment, the unlocking process UP does not differ from a common unlocking process and may e.g. be based on static or rolling codes, so that any existing unlocking process may be advantageously used and easily integrated in the present solution for accessing the interactive good 10.

According to a second aspect, the present solution relates to a portable electronic key 20 configured to provide, in accordance with any of the embodiments of the method or with any possible combination of these embodiments, an authorization 1 to access the interactive good 10.

Fig. 8 schematically shows such a portable electronic key 20 which may first comprise an electronic key transceiver 21 configured for handling wireless signal exchanges. These signal exchanges including:
- at least one first signal S1, preferably at least two first signals S1₁₁, S1₁₂, each received from one transceiver 11, 12 of the interactive good 10, and
- a second signal S2 that is to be emitted by the electronic key transceiver 21.

Accordingly, the electronic key transceiver 21 may be regarded as an interface for exchanging data through wireless signals transmitted between the portable electronic key 20 and the interactive good 10.

As shown in Fig. 8, the portable electronic key 20 further comprises a processing unit 25 connected to the electronic key transceiver 21 and configured:
- to receive, for the first signal S1, preferably for each of the aforementioned at least two first signals S1₁₁, S1₁₂, a first piece of information 11, I1₁₁, I1₁₂ determined on the basis of at least one strength measurement of the first signal S1, S1_{11,} S1₁₂ at the portable electronic key 20,
- to receive a related second piece of information 12, I2₁₁, I2₁₂ determined on the basis of at least one strength measurement of the second signal at the aforementioned at least one transceiver 11, preferably at each of the transceivers 11, 12, and
- to check whether each first piece of information 11, I1₁₁, I1₁₂ is consistent with the related second piece of information 12, I2₁₁, I2₁₂ and, if so, initiating or granting access to an unlocking procedure UP configured to provide the authorization 1.

From the foregoing, one can note that the number of first signals, first pieces of information and second pieces of information depends on the number of transceivers that are included in the interactive good 10. Therefore, the portable electronic key 20 may be configured for handling the case where the interactive good 10 comprises a single transceiver 11, as shown in Fig. 1, or the case where the interactive good 10 comprises a plurality of transceivers 11, 12, as depicted in Fig. 3.

The portable electronic key 20 may further comprise other components such as a cryptographic module 27 to perform any encryption/decryption or authentication task for example. The portable electronic key 20 may also comprise a memory 28, or a storage means, for storing any kind of data such as identifiers, challenges, responses, static or rolling codes and so forth. Although they are not illustrated in Fig. 8, additional components, modules, units or interfaces may be part of the portable electronic key 20, in particular for executing other tasks that have been disclosed in any embodiment suggested in connection with the method of the present solution. Alternatively, the processing unit 25 could be in charge of performing at least a part of these tasks.

According to a third aspect schematically depicted in Fig. 9, the present disclosure relates to an interactive good 10 configured to provide, in accordance with any of the embodiments of the method or with any possible combination of these embodiments, an authorization 1 to access thereto through at least wireless signal exchanges with a portable electronic key 20. The interactive good 10 comprises at least one transceiver 11, preferably at least two transceivers 11, 12 distributed at different locations. Each transceiver 11, 12 is at least configured to emit at least a first signal S1, S1₁₁, S1₁₂ and to receive at least a second signal S2 from the portable electronic key 20.

The interactive good 10 further comprises a controller 15 connected to the aforementioned at least one transceiver 11 12, so as:
- to receive, for each first signal S1, S1₁₁, S1₁₂, a first piece of information 11, I1₁₁, I1₁₂ determined on the basis of at least one strength measurement of the aforementioned first signal S1, S1₁₁, S1₁₂ at the portable electronic key 20,
- to receive, from the at least one transceiver 11, preferably from each of the transceivers 11, 12, a related second piece of information 12, I2₁₁, I2₁₂ determined on the basis of at least one strength measurement of the second signal S2 at each transceiver 11, 12, and
- to check whether each first piece of information 11, I1₁₁, I1₁₂ is consistent with the related second piece of information 12, I2₁₁, I2₁₂ and, if so, initiating or granting access to an unlocking procedure UP configured to provide the authorization 1.

Similar to what has been mentioned in connection with the portable electronic key 20, the present interactive good 10 is configured to be compliant with the scenario shown in Fig. 1, in which a single transceiver 11 is used by the interactive good to performed the method of the present solution, or to be compliant with the scenario shown in Fig. 3 where at least two transceivers 11, 12 could be used for this purpose.

Each of the transceivers 11, 12 can be regarded as an interface for exchanging data with at least one external device, in particular with the portable electronic key 20. The interactive good 10 may further comprise a cryptographic unit 17, for performing any cryptographic operation or authentication process, as well as a storage unit 18 that may be used for storing any kind of data, similarly to the memory 28 of the portable electronic key 20.

### FINAL CONSIDERATIONS

It should be noted that any feature or combination of features disclosed in connection with one of the aspects disclosed in the present disclosure may also be part of any of the other aspects, if applicable.

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method for providing an authorization (1) to access an interactive good (10) by means of a portable electronic key (20) configured for handling wireless signal exchanges,
the interactive good (10) comprising at least one transceiver (11) configured to emit at least a first signal (S1) and to receive at least a second signal (S2) from the portable electronic key (20),
said authorization (1) being subject to a successful completion of a control procedure (CP) comprising:
- determining a first piece of information (11) on the basis of at least one strength measurement of the first signal (S1) at the portable electronic key (20),
- determining a second piece of information (12) on the basis of at least one strength measurement of the second signal (S2) at the transceiver (11),
- checking whether the first piece of information (11) is consistent with the second piece of information (12) and, if so, initiating or granting access to an unlocking procedure (UP) configured to provide said authorization (1).

2. The method of claim 1, wherein each of the first piece of information (11) and the second piece of information (12) relates to at least one of a received signal strength indicator (RSSI), a calculated distance between the transceiver (11) and the portable electronic key (20) and a distance or received signal strength indicator variation.

3. The method of claim 1 or 2, further comprising sending, between the interactive good (10) and the portable electronic key (20), at least one parameter regarding the transmission power of the transceiver (11) and/or the portable electronic key (20).

4. The method of any of preceding claims, wherein the interactive good (10) comprises at least two transceivers (11, 12) distributed at different locations, each of said transceivers (11, 12) being at least configured to emit at least a first signal (S1_{11,} S1₁₂) and to receive at least the second signal (S2) from the portable electronic key (20), and the control procedure (CP) aims to:
- determining, for each of said first signals (S1_{11,} S1₁₂), a first piece of information (I1₁₁, I1₁₂) on the basis of at least one strength measurement of said first signal (S1₁₁, S1₁₂) at the portable electronic key (20),
- determining, for said second signal (S2), a second piece of information (I2₁₁, I2₁₂) on the basis of at least one strength measurement of the second signal (S2) at each of the transceivers (11, 12), and
- checking whether the first pieces of information (I1₁₁, I1₁₂) are consistent with the second pieces of information (I2₁₁, I2₁₂) and, if so, initiating or granting access to an unlocking procedure (UP) configured to provide said authorization (1).

5. The method of claim 4, wherein the step for checking whether the first pieces of information (I1₁₁, I1₁₂) are consistent with the second pieces of information (I2₁₁, I2₁₂) is achieved by:
- forming a first orderly sequence of data (SQ1) by ordering the first pieces of information (I1₁₁, I1₁₂),
- forming a second orderly sequence of data (SQ2) by ordering the second pieces of information (I2₁₁, I2₁₂), and
- checking the consistency between the first and second orderly sequences of data (SQ1, SQ2).

6. The method of claim 5, wherein each transceiver (11, 12) being associated with a specific transceiver identifier (ID_{T}) which is assigned to the first and second pieces of information (11, 12) with which it is involved, and
the consistency between the first and second orderly sequences of data (SQ1, SQ2) is determined on the basis of the transceiver identifiers associated to the first and second pieces of information (11, 12) of said first and second orderly sequences of data (SQ1, SQ2).

7. The method of any of preceding claims, wherein each second piece of information (12, I2₁₁, I2₁₂) is transmitted to the portable electronic key (20), and the control procedure (CP) is performed at the portable electronic key (20), and/or each first piece of information (I1₁₁, I1₁₂) is transmitted to the interactive good (10) and the control procedure (CP) is performed at the interactive good (10).

8. The method of claim 7, wherein if the control procedure (CP) is performed at the portable electronic key (20) and at the interactive good (10), initiating or granting access to the unlocking procedure (UP) is subject to the successful completion of each of the control procedures (CP).

9. The method of any of preceding claims, wherein any first piece of information (11, I1₁₁, I1₁₂) and/or any second piece of information (12, I2₁₁, I2₁₂) is transmitted in an encrypted form and/or is subject to a first authentication process.

10. The method of any of preceding claims, wherein at least one of the first signal (S1, S1₁₁, S1₁₂) and the second signal (S2) is a radio signal, preferably a Bluetooth signal, a Bluetooth low energy signal or a Wi-Fi signal.

11. The method of any of preceding claims, wherein the interactive good (10) comprises several access ways and said authorization (1) relates at least to access the interactive good (10) via the way closest to the transceiver involved with the first and/or second piece of information (11, 12) which represents a closest position of the portable electronic key (20) relative to the interactive good (10).

12. The method of any of preceding claims, wherein the unlocking procedure (UP) comprises at least one of an identification of the portable electronic key (20) by the interactive good (10) and an identification of the interactive good (10) by the portable electronic key (20), and at least one of said identifications is preferably subject to a second authentication process.

13. The method of any of preceding claims, wherein the interactive good (10) is a vehicle, preferably a motor vehicle and still preferably a mobility or a micro-mobility device, and/or the portable electronic key (20) is a key fob, a smart phone, a personal assistant, a netbook, a smart watch or a smart wearable.

14. A portable electronic key (20) configured to provide, in accordance with the method of any of claims 1 to 13, an authorization (1) to access the interactive good (10), said portable electronic key (20) comprising:
an electronic key transceiver (21) configured for handling wireless signal exchanges including:
- at least one first signal (S1), preferably at least two first signals (S1_{11,} S1₁₂), each received from one transceiver (11, 12) of said interactive good (10), and
- a second signal (S2) emitted by said electronic key transceiver (21), a processing unit (26) connected to the electronic key transceiver (21) and configured:
- to receive, for the first signal (S1), preferably for each of the at least two first signals (S1_{11,} S1₁₂), a first piece of information (11, I1₁₁, I1₁₂) determined on the basis of at least one strength measurement of said first signal (S1, S1_{11,} S1₁₂) at the portable electronic key (20),
- to receive a related second piece of information (12, I2₁₁, I2₁₂) determined on the basis of at least one strength measurement of the second signal (S2) at said at least one transceiver (11), preferably at each of said transceivers (11, 12), and
- to check whether each first piece of information (11, I1₁₁, I1₁₂) is consistent with the related second piece of information (12, I2₁₁, I2₁₂) and, if so, initiating or granting access to an unlocking procedure (UP) configured to provide said authorization (1).

15. An interactive good (10) configured to provide, in accordance with the method of any of claims 1 to 13, an authorization (1) to access thereto through at least wireless signal exchanges with a portable electronic key (20), comprising:
at least one transceiver (11), preferably at least two transceivers (11, 12) distributed at different locations, each transceiver (11, 12) being at least configured to emit at least a first signal (S1, S1₁₁, S1₁₂) and to receive at least a second signal (S2) from the portable electronic key (20),
a controller (16) connected to said at least one transceiver (11, 12), so as:
- to receive, for each first signal (S1, S1₁₁, S1₁₂), a first piece of information (11, I1₁₁, I1₁₂) determined on the basis of at least one strength measurement of said first signal (S1, S1_{11,} S1₁₂) at the portable electronic key (20),
- to receive, from said at least one transceiver (11), preferably from each of said transceivers (11, 12), a related second piece of information (12, I2₁₁, I2₁₂) determined on the basis of at least one strength measurement of the second signal (S2) at each transceiver (11, 12), and
- to check whether each first piece of information (11, I1₁₁, I1₁₂) is consistent with the related second piece of information (12, I2₁₁, I2₁₂) and, if so, initiating or granting access to an unlocking procedure (UP) configured to provide said authorization (1).
